# NEUE EUROPÄISCHE PATENTSCHRIFT

(11) **EP 2 913 221 B2**
(45) Veröffentlichungstag und Bekanntmachung des Hinweises auf die Entscheidung über den Einspruch: **28.09.2022**
(45) Hinweis auf die Patenterteilung: 14.11.2018
(21) Anmeldenummer: 15160561.5
(22) Anmeldetag: 08.09.2011
(51) Int. Cl.: B60N 2/22

(54) **FAHRZEUGSITZ MIT EINER AXIAL GESICHERTEN WELLE**
VEHICLE SEAT WITH AN AXIALLY SECURED SHAFT
SIÈGE DE VÉHICULE DOTÉ D'UN ARBRE FIXÉ AXIALEMENT

(30) Priorität: 10.09.2010 DE 102010044947
(43) Veröffentlichungstag der Anmeldung: 02.09.2015
(62) Teilanmeldung aus: 11761003.0
(73) Patentinhaber: Adient Luxembourg Holding S.à r.l., 1855 Luxembourg (LU)
(72) Erfinder: Seibt, Jörg, 50321 Bruehl (DE)
(74) Vertreter: Kutzenberger Wolff & Partner

(56) Entgegenhaltungen:
- DE-A1- 10 037 190
- DE-A1- 10 352 630
- DE-A1- 19 724 554
- US-A- 3 426 386
- US-A1- 2010 219 319
- US-B1- 6 357 828

## Beschreibung

Die vorliegende Erfindung betrifft einen Fahrzeugsitz mit einem Rückenlehnenteil, das mittels eines Lehnenverstellers drehbar an einem Sitzteil vorgesehen ist, wobei der Lehnenversteller eine Welle aufweist, die vorzugsweise ein Drehmoment auf den Lehnenversteller überträgt.
An Fahrzeugsitze werden heutzutage sehr hohe Sicherungsanforderungen gestellt. Beispielsweise muss sichergestellt sein, dass bei einem Heckaufprall der Fahrzeugsitz die auftretenden Lasten aufnehmen kann. US6357828B1 offenbart einen gattungsgemässen Fahrzeugsitz.

Es war deshalb die Aufgabe der vorliegenden Erfindung einen derartigen Fahrzeugsitz zur Verfügung zu stellen.

Gelöst wird die Aufgabe mit einem Fahrzeugsitz nach Anspruch 1.

Der erfindungsgemäße Fahrzeugsitz hat den Vorteil, dass die bei einem Heckaufprall entstehenden Kräfte in Y-Richtung, d. h. quer zur Fahrtrichtung, die Lastaufnahmefähigkeit des Fahrzeugsitzes, insbesondere des Lehnenverstellers, nicht überschreiten.
Die vorliegende Erfindung betrifft einen Fahrzeugsitz, der aus einem Rückenlehnenteil und einem Sitzteil besteht. Ein derartiger Fahrzeugsitz kann einer oder mehreren Personen Platz bieten. Bei dem erfindungsgemäßen Fahrzeugsitz kann es sich auch um eine Sitzbank handeln.
Die Rückenlehne ist mittels eines Lehnenverstellers drehbar an dem Sitzteil vorgesehen beispielsweise um zu Komfortzwecken die Neigung der Rückenlehne verstellen zu können. Derartige Lehnenversteller sind rechts und links an dem erfindungsgemäßen Fahrzeugsitz vorgesehen. Erfindungsgemäß weist der Fahrzeugsitz eine Welle auf, die ein Drehmoment auf mindestens einen der beiden Lehnenversteller zur Änderung der Winkelstellung der Rückenlehne überträgt.

Erfindungsgemäss ist die Welle rohrförmig ausgestaltet. Vorzugsweise weist die Welle an ihrem Umfang Form- und/oder Kraftschlussmittel auf, um ein Drehmoment auf den Lehnenversteller übertragen zu können. Diese Welle ist nun an beiden Enden mit einer Axialsicherung versehen, mit der verhindert wird, dass sich die Welle beispielsweise bei einem Heckaufprall aus dem jeweiligen Lehnenversteller herauszieht, wodurch zum einen die Stabilität des Lehnenverstellers aber auch insgesamt die Stabilität des Fahrzeugsitzes gefährdet wäre. Vorzugsweise sind die Axialsicherungen an den beiden Enden der Welle gleich, ganz besonders bevorzugt jedoch unterschiedlich.

Bei einer nicht zur Erfindung gehörenden Ausführung handelt es sich bei der Axialsicherung um ein mit der Welle stoffschlüssig verbundenes Mittel insbesondere eine Scheibe. Der Stoffschluss kann durch Kleben, insbesondere jedoch durch Schweißen erfolgen.

Weiterhin kann bei einer nicht zur Erfindung gehörenden Ausführung die Axialsicherung als ein Starlock-Washer ausgeführt sein, wobei dieser mit einem Werkzeug auf die Welle aufgeschoben und an der jeweiligen Stelle positioniert wird.

Weiterhin kann bei einer nicht zur Erfindung gehörenden Ausführung die Axialsicherung als eine gewindeschneidende Mutter ausgeführt sein.

Erfindungsgemäss ist die Axialsicherung einstückig mit der Welle vorgesehen, vorzugsweise durch Umformen aus dieser hergestellt. Insbesondere ist die Axialsicherung ein geflarter Bereich. Beim Flaren wird das Ende der Welle, die vorzugsweise rohrförmig vorgesehen ist, manuell oder maschinell um einen bestimmten Winkel, vorzugsweise um 80° - 100°, insbesondere 90°, aufgestellt. Dies erfolgt vorzugsweise mit einem Press- oder Taumelprozess. Diese bevorzugte Ausführungsform der vorliegenden Erfindung hat den Vorteil, dass sie eine sehr hohe Belastbarkeit >5 kN aufweist. Der Flareprozess ist sehr kostengünstig. Darüber hinaus weist eine geflarte Welle einen ausgesprochen geringen Bauraum auf.

Im Folgenden wird die Erfindung anhand der Figuren 1, 2, 5 und 6 erläutert. Diese Erläuterungen sind lediglich beispielhaft und schränken den allgemeinen Erfindungsgedanken nicht ein.
**Figur 1** zeigt den erfindungsgemäßen Fahrzeugsitz.
**Figur 2** zeigt den Sitzversteller mit der Welle.
**Figuren 3 bis 6** zeigen Ausführungsformen der Axialsicherung der Welle.

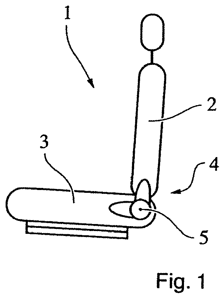

**Figur 1** zeigt den erfindungsgemäßen Fahrzeugsitz 1, der ein Sitzteil 3 aufweist an dem mittels eines Lehnenverstellers 4 drehbar eine Rückenlehne 2 vorgesehen ist. Mit dem Lehnenversteller, beispielsweise einem Recliner, kann beispielsweise die Winkelstellung der Rückenlehne relativ zum Sitzteil zu Komfortzwecken eingestellt werden. Ein derartiger Lehnenversteller 4 ist vorzugsweise rechts und links von dem Fahrzeugsitz angeordnet. Der Lehnenversteller umfasst eine Welle 5, an der üblicherweise ein Handrad oder ein motorischer Antrieb vorgesehen ist. Mit der Welle 5 wird ein Drehmoment auf mindestens einen, vorzugsweise beide Lehnenversteller 4 zur Winkelverstellung der Rückenlehne übertragen.

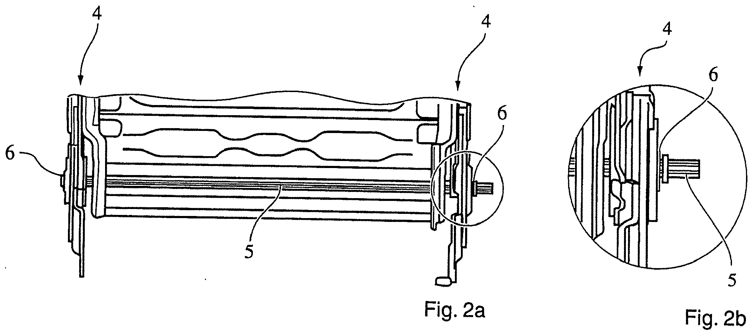

**Figur 2** zeigt, dass sowohl rechts als auch links ein Lehnenversteller 4 an dem erfindungsgemäßen Fahrzeugsitz vorgesehen ist. Diese beiden Lehnenversteller sind durch eine Welle 5 miteinander verbunden, die vorzugsweise als Rohr ausgebildet ist und mit der ein Drehmoment auf vorzugsweise beide Sitzversteller übertragen werden kann. Erfindungsgemäß ist diese Welle nun an beiden Enden, die etwas aus dem jeweiligen Lehnenversteller herausragen, axial gesichert, so dass, wenn sich die Welle 5 beispielsweise in einer Unfallsituation verbiegt, diese nicht aus den Lehnenverstellern 4 herausgezogen wird bzw. damit diese die Stabilität des erfindungsgemäßen Fahrzeugsitzes erhöhen kann.

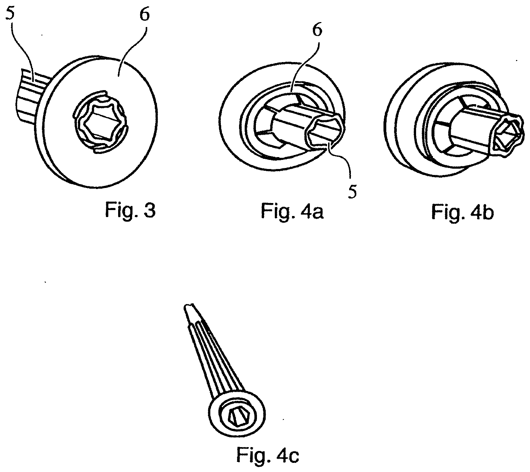

**Figur 3** zeigt eine erste, nicht zur Erfindung gehörende Ausführungsform einer solchen Axialsicherung. In diesem Fall handelt es sich um eine Scheibe, die auf die Welle 5 aufgeschweißt worden ist.

**Figuren 4a** **- c** zeigen eine weitere, nicht zur Erfindung gehörende Ausführungsform der Axialsicherung, die in dem vorliegenden Fall ein sogenannter Starlock-Washer ist. Dieser Starlock-Washer wird mit einem Werkzeug auf die Welle 5 aufgeschoben und an die jeweils gewünschte Position verschoben.

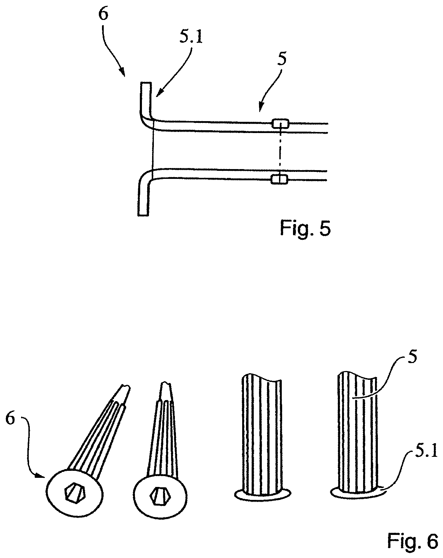

**Figuren 5 und 6** zeigen eine erfindungsgemässe Ausführungsform der Axialsicherung 6 der Welle 5. In dem vorliegenden Fall ist diese Axialsicherung einstückig mit der Welle 5 vorgesehen. Die Axialsicherung ist durch Umformen aus der Welle 5 hergestellt worden. Bei der Axialsicheung handelt es sich vorzugsweise um einen sogenannten geflarten Bereich 5.1, d.h. in diesem Bereich ist die Welle 5, die hier als Rohr ausgeführt worden ist, um hier 90° aufgestellt. Diese Ausführungsform der vorliegenden Erfindung hat den Vorteil, dass sie sehr platzsparend und gewichtsminimierend ist. Darüber hinaus ist diese Ausführungsform sehr leicht zu montieren, weil auf eine Bearbeitung der Welle, nachdem sie montiert worden ist, zumindest einseitig verzichtet werden kann.

### Bezugszeichenliste:

- 1: Fahrzeugsitz
- 2: Rückenlehne
- 3: Sitzteil
- 4: Lehnenversteller, Recliner
- 5: Welle, Achse
- 5.1: getuplter Abschnitt, gekelchter Abschnitt, umgelegter Abschnitt, geflarter Abschnitt
- 6: Axialsicherung

## Patentansprüche

1. Fahrzeugsitz (1) mit einem Rückenlehnenteil (2), das mittels eines Lehnenverstellers (4) drehbar an einem Sitzteil (3) vorgesehen ist, wobei der Lehnenversteller (4) eine Welle (5) aufweist, die vorzugsweise ein Drehmoment auf den Lehnenversteller (4) überträgt, wobei an der Welle (5) an beiden Enden eine Axialsicherung (6) vorgesehen ist, **dadurch gekennzeichnet, dass** die Welle (5) als ein Rohr ausgebildet ist, wobei die Axialsicherung (6) einstückig mit der Welle (5) vorgesehen ist und ein geflarter Bereich der Welle (5) ist.

2. Fahrzeugsitz nach Anspruch 1, **dadurch gekennzeichnet, dass** die Axialsicherung (6) durch ein Ziehen des Endes der Welle (5) um einen definierten Winkel geformt worden ist.

3. Fahrzeugsitz nach Anspruch 1, **dadurch gekennzeichnet, dass** die Axialsicherungen gleich oder unterschiedlich sind.

## Claims

1. Vehicle seat (1) having a backrest part (2) which is provided on a seat part (3) such that it can be rotated by means of a backrest adjuster (4), the backrest adjuster (4) having a shaft (5) which preferably transmits a torque to the backrest adjuster (4), wherein an axial securing means (6) is provided on the shaft (5) at both ends, **characterized in that** the shaft (5) is configured as a tube, wherein the axial securing means (6) is provided integrally with the shaft (5) and is a flared region of the shaft (5).

2. Vehicle seat according to Claim 1, **characterized in that** the axial securing means (6) has been formed by way of the end of the shaft (5) being drawn by a defined angle.

3. Vehicle seat according to Claim 1, **characterized in that** the axial securing means are identical or different.

## Revendications

1. Siège de véhicule (1) comprenant une partie de dossier (2) qui est prévue sur une partie d'assise (3) de manière à pouvoir tourner au moyen d'un dispositif de réglage de dossier (4), le dispositif de réglage de dossier (4) comprenant un arbre (5) qui transmet de préférence un couple au dispositif de réglage de dossier (4), une fixation axiale (6) étant prévue sur l'arbre (5) aux deux extrémités, **caractérisé en ce que** l'arbre (5) est réalisé sous forme de tube, la fixation axiale (6) étant prévue d'une seule pièce avec l'arbre (5) et étant une région évasée de l'arbre (5).

2. Siège de véhicule selon la revendication 1, **caractérisé en ce que** la fixation axiale (6) a été formée par étirage de l'extrémité de l'arbre (5) suivant un angle défini.

3. Siège de véhicule selon la revendication 1, **caractérisé en ce que** les fixations axiales sont identiques ou différentes.
